# FASCICULE DE BREVET EUROPEEN

(11) **EP 3 359 707 B1**
(45) Date de publication et mention de la délivrance du brevet: **05.06.2019**
(21) Numéro de dépôt: 16790656.9
(22) Date de dépôt: 04.10.2016
(51) Int. Cl.: C23C 30/00, F01D 5/28, C04B 41/89, C04B 41/00, C04B 41/52

(54) **PIÈCE DE TURBOMACHINE REVÊTUE D'UN REVÊTEMENT CÉRAMIQUE DE PROTECTION, PROCÉDÉ DE FABRICATION ET D'UTILISATION D'UNE TELLE PIÈCE**
TURBINENMOTORTEIL MIT KERAMISCHER SCHUTZSCHICHT, VERFAHREN ZUR HERSTELLUNG UND ZUR VERWENDUNG DIESES TEILS
TURBINE ENGINE PART COVERED WITH A PROTECTIVE CERAMIC COATING, METHOD FOR MANUFACTURING AND FOR USING SUCH A PART

(30) Priorité: 07.10.2015 FR 1559532
(43) Date de publication de la demande: 15.08.2018
(73) Titulaire: SAFRAN, 75015 Paris (FR)
(72) Inventeur: PODGORSKI, Michael, 77550 Moissy-Cramayel (FR); BERTHOD, Patrice, 54507 Pont à Mousson (FR); MATHIEU, Stéphane, 54506 Vandoeuvre Les Nancy (FR); PORTEBOIS, Léo, 88500 Vemecourt Sur Madon (FR); VILASI, Michel, 54136 Bouxieres aux Dames (FR)
(74) Mandataire: Cabinet Beau de Loménie
(86) Numéro de dépôt international: PCT/FR2016/052537
(87) Numéro de publication internationale: WO 2017/060603

(56) Documents cités:
- WO-A1-2008/000247
- WO-A1-2009/125204
- US-A1- 2009 169 914
- DREXLER J M ET AL: "Air-plasma-sprayed thermal barrier coatings that are resistant to high-temperature attack by glassy deposits", ACTA MATERIALIA, ELSEVIER, OXFORD, GB, vol. 58, no. 20, 1 décembre 2010 (2010-12-01), pages 6835-6844, XP027422970, ISSN: 1359-6454, DOI: 10.1016/J.ACTAMAT.2010.09.013 [extrait le 2010-10-15]
- DREXLER J M ET AL: "Thermal-gradient testing of thermal barrier coatings under simultaneous attack by molten glassy deposits and its mitigation", SURFACE AND COATINGS TECHNOLOGY, ELSEVIER, vol. 204, no. 16-17, 15 mai 2010 (2010-05-15), pages 2683-2688, XP026995596, ISSN: 0257-8972 [extrait le 2010-02-12]
- AYGUN ET AL: "Novel thermal barrier coatings that are resistant to high-temperature attack by glassy deposits", ACTA MATERIALIA, ELSEVIER, OXFORD, GB, vol. 55, no. 20, 17 octobre 2007 (2007-10-17), pages 6734-6745, XP022442737, ISSN: 1359-6454, DOI: 10.1016/J.ACTAMAT.2007.08.028

## Description

### Arrière-plan de l'invention

La présente invention se rapporte au domaine général des revêtements de protection pour les pièces utilisées dans des environnements à haute température. L'invention s'applique plus particulièrement, mais non exclusivement, aux barrières thermiques utilisées pour protéger les pièces en superalliages des turbines à gaz aéronautiques.

Les pièces présentes dans des parties chaudes des turbomachines aéronautiques opérant en milieu désertique, ou très pollué, peuvent se dégrader à cause de l'attaque du sable et des composés alcalins présents dans l'air ingéré par le moteur. Ces composés, qui comprennent notamment des aluminosilicates de calcium et de magnésium (aussi appelés «CMAS»), peuvent dégrader la couche de barrière thermique recouvrant certaines pièces des parties chaudes de la turbomachine.

Parmi les mécanismes de dégradation de la barrière thermique par les CMAS, on distingue notamment l'infiltration à l'état liquide des CMAS dans la couche de barrière thermique, et la dissolution-reprécipitation de la couche de barrière thermique (constituée traditionnellement d'une céramique à base de zircone stabilisée à l'yttrium « YSZ »), en nodules isolés de zircone appauvris en Yttrine. Ces deux mécanismes abaissent les propriétés mécaniques de la couche de barrière thermique et peuvent conduire à sa fissuration au cours des phases de refroidissement du moteur. De plus, l'ingestion de particules solides créée des phénomènes d'érosion de la couche de barrière thermique qui s'écaille et laisse alors le substrat sous-jacent à nu, réduisant ainsi la durée de vie des pièces.

Des solutions existent pour limiter l'infiltration de CMAS dans la couche de barrière thermique. On citera par exemple l'utilisation d'un revêtement protecteur de la barrière thermique à base de zircone dopée au gadolinium (sous la désignation de zirconate de gadolinium par exemple), ou encore l'utilisation d'alumine ou d'oxyde de titane. Ces revêtements, en réagissant avec les CMAS, favorisent leur précipitation, et permettent ainsi de limiter leur pénétration dans la barrière thermique. Cependant, ces revêtements présentent l'inconvénient d'être sacrificiels, ce qui nécessite un entretien permanent, ainsi qu'une surveillance régulière de l'état des pièces.

Le document US 2009/0169914 décrit par exemple une pièce de turbomachine ayant un revêtement céramique de protection contre les aluminosilicates de calcium et magnésium dont la couche supérieure comprend un mélange de 20 à 90 mol% d'alumine et d'un aluminosilicate de terres rares.

Il existe donc un besoin pour disposer d'un revêtement pour protéger les pièces des CMAS qui présente une durée de vie élevée notamment dans les environnements et les conditions de fonctionnement d'une turbomachine aéronautique.

### Objet et résumé de l'invention

La présente invention a donc pour but principal de pallier de tels inconvénients en proposant une pièce de turbomachine comportant au moins un substrat et un revêtement céramique de protection contre les aluminosilicates de calcium et de magnésium présent sur le substrat, le revêtement céramique comprenant :
- de l'Al₂O₃ (alumine) en une teneur molaire comprise entre 33% et 49%,
- du Y₃Al₅O₁₂ (grenat d'yttrium-aluminium ou « YAG ») en une teneur molaire comprise entre 21% et 53%, et
- de la zircone stabilisée à l'yttrium (ou « Yttria Stabilized Zirconia », « YSZ », phase fluorite) en une teneur molaire comprise entre 13% et 31%.

La pièce revêtue selon l'invention est remarquable de par la composition de son revêtement céramique. En effet, un tel revêtement céramique présente l'avantage de développer une couche protectrice lorsqu'il réagit au contact d'aluminosilicates de calcium et de magnésium (CMAS) à haute température.

Les inventeurs ont observé qu'après utilisation de la pièce dans un milieu oxydant à une température de plus de 1000°C et au contact de composés CMAS (c'est-à-dire des composés comprenant notamment des oxydes de calcium, de magnésium, d'aluminium et de silicium), une couche protectrice se forme dans le revêtement céramique au niveau de sa surface externe (c'est-à-dire la surface du revêtement située du côté opposé au substrat). Cette couche protectrice comprend des composés sous forme cristallisée tels qu'une spinelle (MgAl₂O₄), de l'anorthite (CaAlSi₂O₈) et du grenat (un oxyde mixte pouvant comprendre notamment les éléments Mg, Al, Si, Ca, Fe et Y). En outre, les inventeurs ont remarqué que cette couche protectrice cristallisée est imperméable aux CMAS. En d'autres termes, les CMAS ne s'infiltrent pas à travers la couche protectrice formée dans le revêtement. Ainsi, un tel revêtement protège le substrat sous-jacent et augmente sa durée de vie.

De préférence, le revêtement céramique comprend :
- de l'Al₂O₃ en une teneur molaire comprise entre 37% et 45%,
- du Y₃Al₅O₁₂ en une teneur molaire comprise entre 29% et 45%, et
- de la zircone stabilisée à l'yttrium en une teneur molaire comprise entre 17% et 27%.

De préférence encore, la composition du revêtement peut correspondre sensiblement à la composition d'un matériau céramique eutectique alumine-YAG-YSZ. Une telle céramique eutectique présente une teneur molaire d'environ 41% en alumine, environ 37% en YAG et environ 22% en YSZ. Cette composition est avantageuse car l'eutectique présente une structure tridimensionnelle imbriquée, notamment lorsqu'il est fabriqué par un procédé de solidification dirigée. Un tel revêtement céramique eutectique conserve de bonnes propriétés mécaniques jusqu'à des températures proches de sa température de fusion.

De préférence également, une épaisseur du revêtement céramique est comprise entre 50 µm et 200 µm, par exemple entre 150 µm et 200 µm.

Le substrat peut comprendre un matériau choisi parmi les suivants : un superalliage métallique (par exemple à base de Nickel), un matériau composite à matrice céramique.

La pièce peut comporter en outre une couche de barrière thermique présente entre le substrat et le revêtement céramique. Cette couche de barrière thermique peut par exemple comprendre une céramique à base de zircone stabilisée à l'yttrium. Dans ce cas, le revêtement céramique empêche l'infiltration de CMAS à l'intérieur de la couche de barrière thermique, évite ainsi sa dégradation et augmente sa durée de vie.

Le substrat peut constituer une pièce pour turbomachine aéronautique choisie parmi les suivantes : une aube de turbine, au moins une partie d'un distributeur de turbine, au moins une partie d'un anneau de turbine.

L'invention vise également un procédé de fabrication d'une pièce de turbomachine telle que celle présentée ci-dessus, le procédé comprenant au moins une étape de formation sur le substrat du revêtement céramique, le revêtement céramique comprenant :
- du Al₂O₃ en une teneur molaire comprise entre 33 % et 49 %,
- du Y₃Al₅O₁₂ en une teneur molaire comprise entre 21 % et 53 %, et
- de la zircone stabilisée à l'yttrium en une teneur molaire comprise entre 13 % et 31 %.

Le revêtement céramique peut être formé par frittage.

En variante, le revêtement céramique peut être formé par solidification dirigée. Par exemple, le revêtement céramique peut être formé par dépôt d'un mélange de poudres d'Yttrine, d'alumine et de zircone (ou un mélange de poudres d'alumine, de YAG et de YSZ) sur le substrat, puis par solidification dirigée par fusion laser (le revêtement peut éventuellement être formé en plusieurs fois). Ce procédé présente l'avantage de former un revêtement céramique dépourvu de joints de grains, ce qui améliore encore ses propriétés mécaniques.

L'invention vise enfin un procédé d'utilisation d'une pièce de turbomachine telle que celle présentée précédemment, comportant une étape d'utilisation de la pièce à une température supérieure à 1000°C en milieu oxydant et en présence d'aluminosilicates de calcium et de magnésium. Ces conditions d'utilisation correspondent sensiblement aux conditions environnementales que l'on retrouve dans les parties chaudes d'une turbomachine aéronautique en milieu désertique (et notamment dans les turbines de la turbomachine).

La pièce peut en particulier être utilisée à une température supérieure ou égale à 1300°C.

### Brève description des dessins

D'autres caractéristiques et avantages de la présente invention ressortiront de la description faite ci-dessous, en référence aux dessins annexés qui en illustrent des exemples de réalisation dépourvu de tout caractère limitatif. Sur les figures :

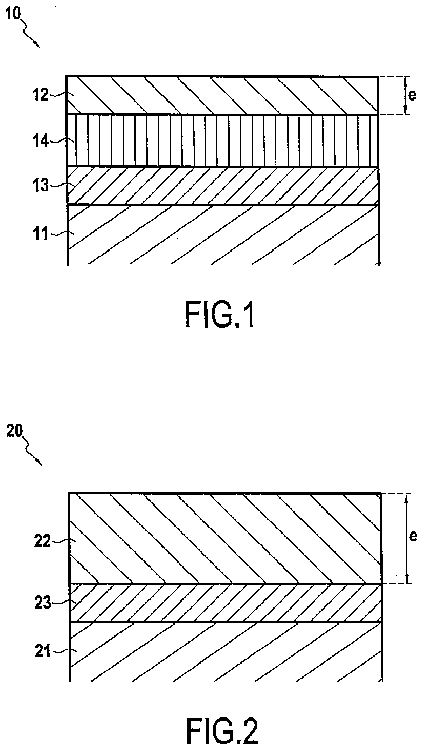

- les figures 1 et 2 sont des vues agrandies en coupe de la surface de pièces de turbomachine selon deux modes de réalisation de l'invention.

### Description détaillée de l'invention

La figure 1 montre une vue agrandie en coupe de la surface d'une pièce de turbomachine 10 comprenant un substrat 11 revêtu d'un revêtement céramique 12 de protection contre les aluminosilicates de calcium et de magnésium (CMAS). La pièce 10 comprend dans cet ordre : le substrat 11, une couche de liaison 13, une couche de barrière thermique 14 et le revêtement céramique 12.

Conformément à l'invention, le revêtement céramique 12 comprend de l'alumine Al₂O₃ en une teneur molaire comprise entre 33% et 49%, plus préférentiellement comprise entre 37% et 45%. Le revêtement céramique 12 comprend également du grenat d'yttrium-aluminium Y₃Al₅O₁₂ (ou YAG) en une teneur molaire comprise entre 21% et 53%, plus préférentiellement comprise entre 29% et 45%. Le revêtement céramique 12 comprend en outre de la zircone stabilisée à l'yttrium (ou YSZ) en une teneur molaire comprise entre 13% et 31%, plus préférentiellement comprise entre 17% et 27%. Le revêtement céramique 12 peut comporter uniquement du YAG, de l'alumine et du YSZ. En d'autres termes, le revêtement céramique 12 peut être dépourvu d'un composé autre que le YAG, l'alumine ou YSZ.

Le substrat 11 peut par exemple comprendre un superalliage métallique, par exemple un superalliage à base de nickel, ou un matériau composite à matrice céramique.

Dans l'exemple illustré sur la figure 1, le revêtement céramique 12 est directement au contact de la couche de barrière thermique 14, et est présent sur une surface de cette couche 14. L'épaisseur e du revêtement 12 peut par exemple être comprise entre 50 µm et 200 µm. La couche de liaison 13 est quant à elle présente entre le substrat 11 et la couche de barrière thermique 14, et est directement à leur contact.

De façon connue en soi, la couche de barrière thermique 14 peut comprendre de la zircone stabilisée à l'yttrium (ou « Yttria Stabilized Zirconia YSZ ») qui présente une structure colonnaire.

La couche de liaison 13, connue en soi, permet d'assurer une bonne adhésion de la couche de barrière thermique 14 sur le substrat 11. Plus généralement, une telle couche de liaison 13 permet d'assurer une bonne compatibilité mécanique entre la couche de barrière thermique 14 et le substrat 11, en compensant notamment la dilatation thermique différentielle qui pourrait exister entre les matériaux de la couche 14 et du substrat 11.

Dans le cas où le substrat 11 comprend un superalliage métallique, la couche de liaison 13 peut par exemple comprendre un aluminiure simple ou modifié (par exemple NiCrAlY pour un substrat en superalliage à base de nickel), qui peut s'oxyder en partie pour former une couche d'oxyde (aussi appelée TGO pour « Thermally Grown Oxide »).

Dans le cas où le substrat 11 comprend un matériau composite à matrice céramique, la couche de liaison 13 peut comprendre du silicium.

De manière générale, le matériau de la couche de liaison 13 sera adapté en fonction des matériaux formant le substrat 11 et la couche de barrière thermique 14.

La figure 2 montre une vue agrandie en coupe de la surface d'une pièce de turbomachine 20 selon un autre mode de réalisation de l'invention. Dans cet exemple, la pièce 20 comprend dans cet ordre : un substrat 21, une couche de liaison 23 et un revêtement céramique 22. A la différence de l'exemple de la figure 1, la pièce 20 est ici dépourvue de couche de barrière thermique additionnelle. En effet, dans cet exemple, le revêtement céramique 22 joue le rôle d'une barrière thermique qui protège le substrat 21.

Le substrat 21, la couche de liaison 23 et le revêtement céramique 22 peuvent présenter des caractéristiques identiques au substrat 11, à la couche de liaison 13, et au revêtement céramique 12 de l'exemple de la figure 1, respectivement. Il est toutefois possible de modifier l'épaisseur e du revêtement céramique 22, par exemple en l'augmentant par rapport à l'exemple de la figure 1.

Dans l'exemple de la figure 2, la couche de liaison 23 est présente entre le substrat 21 et le revêtement céramique 22, et directement à leur contact. Comme pour la pièce 10 de la figure 1, le matériau formant la couche de liaison 23 peut être adapté en fonction du matériau formant le substrat 21.

Dans les exemples illustrés, les substrats 11, 21 des pièces 10, 20 peuvent consister en une pièce pour turbomachine aéronautique choisie parmi les suivantes : une aube de turbine, au moins une partie d'un distributeur de turbine, au moins une partie d'un anneau de turbine.

Bien entendu, l'invention ne se limite pas aux configurations décrites précédemment en lien avec les exemples illustrés, et il est tout à fait envisageable d'utiliser d'autres configurations de pièces revêtues d'un revêtement céramique dans le cadre de l'invention.

Un procédé de fabrication d'une pièce 10, 20 selon l'invention est également objet de la présente invention. Un tel procédé comprend au moins une étape consistant à former un revêtement céramique 12, 22 tel que celui présenté précédemment sur le substrat 11, 21 de la pièce. Le revêtement céramique 12 peut être formé directement sur une couche de barrière thermique 14 présente sur le substrat 11, ou, en variante, directement sur une couche de liaison 23 présente sur le substrat 21.

On peut former le revêtement céramique 12, 22 par frittage d'une composition de poudres comprenant les quantités adéquates d'alumine, d'Yttrine et de zircone. On notera que, dans ce cas, le grenat d'yttrium-aluminium (YAG) et la zircone stabilisée à l'yttrium (YSZ) sont formés suite à l'étape de frittage. On peut aussi fritter directement un mélange de poudres comprenant de l'alumine, du YAG et du YSZ.

En variante, on peut former le revêtement céramique 12, 22 par un procédé de solidification dirigée mettant en oeuvre de la fusion laser. Pour ce faire, on peut déposer sur le substrat des poudres d'alumine, d'Yttrine et de zircone, puis procéder à la fusion laser de la couche de suspension déposée pour obtenir le revêtement céramique. Comme pour le frittage, dans ce cas, le grenat d'yttrium-aluminium et la zircone stabilisée à l'yttrium sont formés suite à l'étape de solidification dirigée. On peut aussi utiliser directement un mélange de poudres comprenant de l'alumine, du YAG et du YSZ.

Un procédé d'utilisation d'une pièce 10, 20 selon l'invention est encore objet de la présente invention. Un tel procédé comprend une étape d'utilisation de la pièce 10, 20 à une température supérieure à 1000°C en milieu oxydant et en présence d'aluminosilicates de calcium et de magnésium. Ces conditions d'utilisation correspondent sensiblement aux conditions environnementales que l'on retrouve dans les parties chaudes d'une turbomachine aéronautique en milieu désertique (et notamment au sein des turbines de la turbomachine). Quand une pièce 10, 20, selon l'invention est utilisée dans de telles conditions, le revêtement céramique 12, 22 forme, en réagissant avec des aluminosilicates de calcium et de magnésium qui viennent à son contact, une couche protectrice imperméable aux aluminosilicates de calcium et de magnésium. Ainsi, le substrat 11, 21 de la pièce 10, 20 est protégé grâce au revêtement 12, 22 selon l'invention.

## Revendications

1. Pièce de turbomachine (10, 20) comportant au moins un substrat (11, 21) et un revêtement céramique (12, 22) de protection contre les aluminosilicates de calcium et de magnésium présent sur le substrat, le revêtement céramique comprenant :
- de l'Al₂O₃ en une teneur molaire comprise entre 33 % et 49 %,
- du Y₃Al₅O₁₂ en une teneur molaire comprise entre 21 % et 53 %, et
- de la zircone stabilisée à l'yttrium en une teneur molaire comprise entre 13 % et 31 %.

2. Pièce selon la revendication 1, dans laquelle le revêtement céramique (12, 22) comprend :
- de l'Al₂O₃ en une teneur molaire comprise entre 37 % et 45 %,
- du Y₃Al₅O₁₂ en une teneur molaire comprise entre 29 % et 45 %, et
- de la zircone stabilisée à l'yttrium en une teneur molaire comprise entre 17 % et 27 %.

3. Pièce selon l'une quelconque des revendications 1 et 2, dans laquelle une épaisseur (e) du revêtement céramique (12, 22) est comprise entre 50 µm et 200 µm.

4. Pièce selon l'une quelconque des revendications 1 à 3, dans laquelle le substrat (11, 21) comprend un matériau choisi parmi les suivants : un superalliage métallique, un matériau composite à matrice céramique.

5. Pièce selon l'une quelconque des revendications 1 à 4, comportant en outre une couche de barrière thermique (14) présente entre le substrat (11) et le revêtement céramique (12).

6. Pièce selon l'une quelconque des revendications 1 à 5, dans laquelle le substrat constitue une pièce pour turbomachine aéronautique choisie parmi les suivantes : une aube de turbine, au moins une partie d'un distributeur de turbine, au moins une partie d'un anneau de turbine.

7. Procédé de fabrication d'une pièce selon l'une quelconque des revendications 1 à 6, le procédé comprenant au moins une étape de formation sur le substrat du revêtement céramique, le revêtement céramique comprenant :
- de l'Al₂O₃ en une teneur molaire comprise entre 33 % et 49 %,
- du Y₃Al₅O₁₂ en une teneur molaire comprise entre 21 % et 53 %, et
- de la zircone stabilisée à l'yttrium en une teneur molaire comprise entre 13 % et 31 %.

8. Procédé selon la revendication 7, dans lequel le revêtement céramique est formé par frittage.

9. Procédé selon la revendication 7, dans lequel le revêtement céramique est formé sur le substrat par solidification dirigée.

10. Procédé d'utilisation d'une pièce selon l'une quelconque des revendications 1 à 6, comportant une étape d'utilisation de la pièce à une température supérieure à 1000°C en milieu oxydant et en présence d'aluminosilicates de calcium et de magnésium.

## Patentansprüche

1. Turbomaschinenteil (10, 20), umfassend wenigstens ein Substrat (11, 21) und eine Keramikbeschichtung (12, 22) zum Schutz gegen die auf dem Substrat vorhandenen Calcium- und Magnesiumaluminosilikate, wobei die Keramikbeschichtung umfasst:
- Al₂O₃ in einem Molgehalt zwischen 33 % et 49 %,
- Y₃Al₅O₁₂ in einem Molgehalt zwischen 21 % et 53 %, und
- Yttrium-stabilisiertes Zirkonoxid in einem Molgehalt zwischen 13 % und 31 %.

2. Teil nach Anspruch 1, wobei die Keramikbeschichtung (12, 22) umfasst:
- Al₂O₃ in einem Molgehalt zwischen 37 % et 45 %,
- Y₃Al₅O₁₂ in einem Molgehalt zwischen 29 % et 45 %, und
- Yttrium-stabilisiertes Zirkonoxid in einem Molgehalt zwischen 17 % und 27 %.

3. Teil nach einem der Ansprüche 1 und 2, bei dem eine Dicke (e) der Keramikbeschichtung (12, 22) zwischen 50 µm und 200 µm beträgt.

4. Teil nach einem der Ansprüche 1 bis 3, bei dem das Substrat (11, 21) ein Material umfasst, das aus den folgenden ausgewählt ist: einer metallischen Superlegierung, einem Keramikmatrix-Verbundwerkstoff.

5. Teil nach einem der Ansprüche 1 bis 4, ferner umfassend eine zwischen dem Substrat (11) und der Keramikbeschichtung (12) vorhandene Wärmesperrschicht (14).

6. Teil nach einem der Ansprüche 1 bis 5, bei dem das Substrat ein Teil für eine Luftfahrtturbomaschine bildet, das aus den folgenden ausgewählt ist: einer Turbinenschaufel, wenigstens einem Teil eines Turbinenleitrades, wenigstens einem Teil eines Turbinenrings.

7. Verfahren zur Herstellung eines Teils nach einem der Ansprüche 1 bis 6, wobei das Verfahren wenigstens einen Schritt zur Ausbildung der Keramikbeschichtung auf dem Substrat umfasst, wobei die Keramikbeschichtung umfasst:
- Al₂O₃ in einem Molgehalt zwischen 33 % et 49 %,
- Y₃Al₅O₁₂ in einem Molgehalt zwischen 21 % et 53 %, und
- Yttrium-stabilisiertes Zirkonoxid in einem Molgehalt zwischen 13 % und 31 %.

8. Verfahren nach Anspruch 7, bei dem die Keramikbeschichtung durch Sintern gebildet wird.

9. Verfahren nach Anspruch 7, bei dem die Keramikbeschichtung durch gerichtete Erstarrung auf dem Substrat gebildet wird.

10. Verfahren zur Verwendung eines Teils nach einem der Ansprüche 1 bis 6, umfassend einen Schritt des Verwendens des Teil bei einer Temperatur von über 1000 °C in oxidierendem Medium und in Gegenwart von Calcium- und Magnesiumaluminosilikaten.

## Claims

1. A turbine engine part (10, 20) comprising at least a substrate (11, 21), and present on the substrate, a ceramic coating (12, 22) for protection against calcium and magnesium aluminosilicates, the ceramic coating comprising:
- Al₂O₃ at a molar content lying in the range 33% to 49%;
- Y₃Al₅O₁₂ at a molar content lying in the range 21% to 53%; and
- yttria-stabilized zirconia at a molar content lying in the range 13% to 31%.

2. A part according to claim 1, wherein the ceramic coating (12, 22) comprises:
- Al₂O₃ at a molar content lying in the range 37% to 45%;
- Y₃Al₅O₁₂ at a molar content lying in the range 29% to 45%; and
- yttria-stabilized zirconia at a molar content lying in the range 17% to 27%.

3. A part according to claim 1 or claim 2, wherein the ceramic coating (12, 22) has a thickness (e) lying in the range 50 µm to 200 µm.

4. A part according to any one of claims 1 to 3, wherein the substrate (11, 21) comprises a material selected from the following: a metal superalloy and a ceramic matrix composite material.

5. A part according to any one of claims 1 to 4, further comprising a thermal barrier layer (14) present between the substrate (11) and the ceramic coating (12).

6. A part according to any one of claims 1 to 5, wherein the substrate constitutes a part for an aviation turbine engine selected from among the following parts: a turbine blade; at least a portion of a turbine nozzle; and at least a portion of a turbine ring.

7. A method of fabricating a part according to any one of claims 1 to 6, the method comprising at least a step of forming the ceramic coating on the substrate, the ceramic coating comprising:
- Al₂O₃ at a molar content lying in the range 33% to 49%;
- Y₃Al₅O₁₂ at a molar content lying in the range 21% to 53%; and
- yttria-stabilized zirconia at a molar content lying in the range 13% to 31%.

8. A method according to claim 7, wherein the ceramic coating is formed by sintering.

9. A method according to claim 7, wherein the ceramic coating is formed on the substrate by directed solidification.

10. A method of using a part according to any one of claims 1 to 6, comprising a step of using the part at a temperature higher than 1000°C in an oxidizing medium and in the presence of calcium and magnesium aluminosilicates.
